# EUROPÄISCHE PATENTANMELDUNG

(11) **EP 4 756 311 A1**
(43) Veröffentlichungstag der Anmeldung: **10.06.2026**
(21) Anmeldenummer: 24217568.5
(22) Anmeldetag: 04.12.2024
(51) Int. Cl.: F24S 25/61, F24S 25/636, H02S 20/24, F16B 25/00

(54) **STOCKSCHRAUBE UND BEFESTIGUNGSVORRICHTUNG MIT DERARTIGER STOCKSCHRAUBE**

(71) Anmelder: AEROCOMPACT Group Holding GmbH, 1220 Wien (AT)
(72) Erfinder: Burger, Markus M., 6791 St. Gallenkirch (AT)
(74) Vertreter: Patent- und Rechtsanwälte Behrmann Wagner PartG mbB

(57) **Zusammenfassung**

Es wird eine Stockschraube (2) zur Fixierung eines Anbindungselements (10) zur Befestigung von Photovoltaik- und/oder Solarthermie-Paneelen an einem Dach vorgeschlagen, umfassend einen in das Dach einschraubbaren ersten Gewindeabschnitt (6), einen zweiten Gewindeabschnitt (7), einen den ersten Gewindeabschnitt (6) mit dem zweiten Gewindeabschnitt (7) verbindenden Schaft (5) und einen Ringbund (8), der an dem Schaft (5) angeordnet ist. Ferner wird eine Befestigungsvorrichtung (1), umfassend eine derartige Stockschraube (2), ein Anbindungselement (10) und eine Mutter (9) vorgeschlagen.

## Beschreibung

Die vorliegende Erfindung betrifft eine Stockschraube zur Fixierung eines Anbindungselements zur Befestigung von Photovoltaik- und/oder Solarthermie-Paneelen an Dächern bzw. Dachkonstruktionen, umfassend einen in das Dach einschraubbaren ersten Gewindeabschnitt, einen zweiten Gewindeabschnitt und einen den ersten Gewindeabschnitt mit dem zweiten Gewindeabschnitt verbindenden Schaft. Ferner betrifft die Erfindung eine Befestigungsvorrichtung zur Befestigung von Photovoltaik- und/oder Solarthermie-Paneelen an Dächern, umfassend eine derartige Stockschraube.

Um auf Dachkonstruktionen Photovoltaik- und/oder Solarthermie-Paneele befestigen zu können, ist es aus dem Stand der Technik bekannt, Stockschrauben zu verwenden.

Die DE 20 2009 007 526 U1 beschreibt beispielsweise eine Vorrichtung zur Befestigung einer Montageschiene an einem Gewindeschaft einer Stockschraube. Bei der aus der DE 20 2009 007 526 U1 bekannten Vorrichtung ist ein Klemmelement mittels zweier Muttern an der Stockschraube fixiert. An dem Klemmelement ist die Montageschiene gesichert.

Eine Montage der aus der DE 20 2009 007 526 U1 bekannten Vorrichtung ist aufgrund der zwei aufzuschraubenden Muttern mithin aufwendig.

Basierend auf dem bekannten Stand der Technik besteht die Aufgabe der vorliegenden Erfindung darin, eine Stockschraube bereitzustellen, welche auf einfache Weise montierbar ist, und eine Befestigungsvorrichtung zu realisieren, umfassend eine derartige Stockschraube, die auf leichte Weise montierbar ist und eine sichere Fixierung von Photovoltaik- und/oder Solarthermie-Paneelen an Dächern gewährleistet.

Diese Aufgabe wird erfindungsgemäß durch die Stockschraube mit den Merkmalen des Patentanspruchs 1 sowie die Befestigungsvorrichtung mit den Merkmalen des Patentanspruchs 5 gelöst.

Vorteilhafte Ausführungsformen der vorliegenden Erfindung sind Gegenstand der nachfolgenden Beschreibung, der Figurenbeschreibung, der Figuren sowie der Unteransprüche.

Erfindungsgemäß wird also eine Stockschraube zur Fixierung eines Anbindungselements zur Befestigung von Photovoltaik- und/oder Solarthermie-Paneelen an einem Dach bzw. an einer Dachkonstruktion bereitgestellt, die einen ersten Gewindeabschnitt, einen zweiten Gewindeabschnitt und einen Schaft umfasst. Der erste Gewindeabschnitt ist in das Dach einschraubbar. Der Schaft verbindet den ersten Gewindeabschnitt mit dem zweiten Gewindeabschnitt. An dem Schaft ist ein, insbesondere ringförmiger, Ringbund angeordnet.

Kerngedanke der Erfindung ist es also, die Stockschraube mit einem Ringbund zu versehen. Der Ringbund bildet eine Auflagefläche für ein Anbindungselement zur Befestigung von Photovoltaik- und/oder Solarthermie-Paneelen an Dächern.

Bei der erfindungsgemäßen Stockschraube bedarf es zur Fixierung des Anbindungselements an der Stockschraube mithin nur einer Mutter. Ein Montageaufwand zur Befestigung des Anbindungselements an der Stockschraube ist demnach im Vergleich zu der aus der DE 20 2009 007 526 U1 bekannten Vorrichtung reduziert.

Der Ringbund ist beispielsweise an einem an den zweiten Gewindeabschnitt angrenzenden Ende des Schafts oder in einem an dem zweiten Gewindeabschnitt angrenzenden Endbereich des Schafts angeordnet.

Bei einer vorteilhaften Ausführungsform der Stockschraube nach der Erfindung ist die Stockschraube einteilig, insbesondere monolithisch, ausgebildet.

Bei einer beispielhaften Ausführungsform der Stockschraube nach der Erfindung ist die Stockschraube mit Ausnahme des Ringbundes, einteilig, insbesondere monolithisch, ausgebildet. D.h. der Ringbund bildet ein separates an dem Schaft der Stockschraube fixiertes Bauelement.

Der Ringbund kann an den Schaft angeschmiedet sein.

Der Ringbund ist gewindefrei.

Bei einer beispielhaften Ausführungsform der Stockschraube nach der Erfindung ist der Ringbund nicht-lösbar an dem Schaft fixiert. Der Ringbund und der Schaft sind also nicht-lösbar miteinander verbundene, separate Bauteile.

Beispielsweise ist der Ringbund stoffschlüssige an dem Schaft fixiert, insbesondere mittels eines Klebemittels.

Bei einer bevorzugten Ausführungsform der Stockschraube nach der Erfindung umfasst der erste Gewindeabschnitt ein selbstschneidendes Gewinde, d.h. ein Gewinde, das beim Eindrehen in das Dach in diesem ein passendes Gewinde schneidet bzw. ein Loch bohrt. Dies vermeidet die Notwendigkeit von Vorbohrungen und ermöglicht mithin eine schnelle und einfache Befestigung der Stockschraube an dem Dach.

Der zweite Gewindeabschnitt kann ein Regelgewinde, insbesondere ein metrisches ISO-Regelgewinde, umfassen.

Bei einer beispielhaften Ausführungsform der Stockschraube nach der Erfindung umfasst der zweite Gewindeabschnitt, insbesondere an einem dem Schaft abgewandten Ende, einen Schraubenkopfantrieb für den Eingriff eines Werkzeugs.

Der Schraubenkopfantrieb ist beispielsweise ein Innensechskant.

Die Stockschraube kann, insbesondere mit Ausnahme des Ringbunds oder mitsamt dem Ringbunds, aus einem Stahl-Guss oder einem Zink-Alu-Druckguss gebildet sein.

Beispielsweise ist die Stockschraube, insbesondere mit Ausnahme des Ringbunds oder mitsamt dem Ringbund, mittels eines additiven Fertigungsverfahrens hergestellt.

Die Stockschraube kann mit einem Korrosionsschutz beschichtet sein.

Des Weiteren betrifft die vorliegende Erfindung eine Befestigungsvorrichtung zur Befestigung von Photovoltaik- und/oder Solarthermie-Paneelen an einem Dach bzw. einer Dachkonstruktion, die ein Anbindungselement, an welchem das Photovoltaik- bzw. Solarthermie-Paneel und/oder eine Montageschiene des Photovoltaik- bzw. Solarthermie-Paneels fixierbar ist, eine Mutter sowie eine im vorhergehenden beschriebene Stockschraube umfasst. Die Mutter ist aus einer Montageposition, in welcher das Anbindungselement relativ zu der Stockschraube, insbesondere in eine sich orthogonal zu der Achsrichtung der Stockschraube erstreckenden Querrichtung, beweglich ist, derart auf den zweiten Gewindeabschnitt aufschraubbar, dass die Mutter in eine Sicherungsposition gelangt. In der Sicherungsposition fixiert die Mutter zusammen mit dem Ringbund der Stockschraube das Anbindungselement kraftschlüssig an der Stockschraube.

Kerngedanke der Erfindung ist es also, das Anbindungselement durch Aufschrauben der Mutter auf den zweiten Gewindeabschnitt zwischen dem Ringbund und der Mutter einzuklemmen.

Zur Befestigung des Anbindungselements an der Stockschraube bedarf es also nur genau einer Mutter. Die erfindungsgemäße Befestigungsvorrichtung ist mithin auf einfache Weise montierbar.

Die Mutter weist beispielsweise einen Flansch auf.

An dem Flansch kann die Mutter an dem Anbindungselement anliegen, insbesondere kann die Mutter über den Flansch zusammen mit dem Ringbund das Anbindungselement kraftschlüssig an der Stockschraube fixieren.

Bei einer bevorzugten Ausführungsform der Befestigungsvorrichtung nach der Erfindung umfasst das Anbindungselement ein Bodenelement und ein Rückenelement.

Das Rückenelement grenzt, insbesondere in Querrichtung, endseitig an das Anbindungselement an.

Die Querrichtung erstreckt sich beispielsweise orthogonal zu der Achsrichtung der Stockschraube. Die Achsrichtung der Stockschraube entspricht beispielsweise einer Hochrichtung.

Beispielsweise erstreckt sich das Bodenelement in Querrichtung.

Das Rückenelement erstreckt sich beispielsweise zumindest annähernd orthogonal zu dem Bodenelement.

Das Rückenelement kann sich zu mindestens im Wesentlichen in Hochrichtung erstrecken.

Das Anbindungselement weist bei einem Schnitt entlang einer sich in Hochrichtung und Querrichtung erstreckenden Schnittebene, beispielsweise ein L-förmiges Profil auf.

Bei einer beispielhaften Ausführungsform der Befestigungsvorrichtung nach der Erfindung umfasst das Anbindungselement mindestens eine Verbindungswand, insbesondere zwei Verbindungswände, welche das Bodenelement mit dem Rückenelement verbindet bzw. verbinden.

Die Verbindungswand ist beispielsweise eine Seitenwand, welche das Bodenelement seitlich mit dem Rückenelement verbinden. Dies erhöht die Stabilität des Anbindungselements. Die Seitenwände können also eine Verstärkungsstruktur bilden.

Auch kann die Verbindungswand an einer dem Rückenelement zugewandten Seite des Bodenelements und/oder einer dem Bodenelement zugewandten Seite des Rückenelements, insbesondere endseitig, angeordnet sein.

Bei einer bevorzugten Ausführungsform der Befestigungsvorrichtung nach der Erfindung umfasst das Anbindungselement, insbesondere das Bodenelement, ein erstes Langloch.

Die Längserstreckung des ersten Langloches verläuft beispielsweise in Querrichtung.

In dem ersten Langloch ist beispielsweise die Stockschraube, insbesondere der Schaft und/oder der zweite Gewindeabschnitt, angeordnet bzw. erstreckt sich hindurch.

Das erste Langloch kann somit einen Bewegungsspielraum für die Relativbewegung des Anbindungselements zu der Stockschraube in Querrichtung definieren.

Bei einer bevorzugten Ausführungsform der Befestigungsvorrichtung nach der Erfindung umfasst das Anbindungselement, insbesondere das Rückenelement, ein zweites Langloch.

Durch das zweite Langloch erstreckt sich beispielsweise eine Schraube, mittels welcher eine Aufnahmevorrichtung für das Photovoltaik- bzw. Solarthermie-Paneel und/oder des Photovoltaik- bzw. Solarthermie-Paneels an dem Anbindungselement fixierbar ist, insbesondere welche in eine Bohrung, insbesondere eine Durchgangsbohrung der Aufnahmevorrichtung zur Fixierung der Aufnahmevorrichtung an dem Anbindungselement einschraubbar ist.

Bei einer beispielhaften Ausführungsform der Befestigungsvorrichtung nach der Erfindung umfasst die Schraube einen weiteren Schraubenkopfantrieb.

Die Ausgestaltung des weiteren Schraubenkopfantriebs kann der Ausgestaltung des Schraubenkopfantriebs der Stockschraube entsprechen. Dies vereinfacht die Montage der Befestigungsvorrichtung weiter.

Bei einer bevorzugten Ausführungsform umfasst die Befestigungsvorrichtung nach der Erfindung eine Aufnahmevorrichtung zur Anbindung des Photovoltaik- bzw. Solarthermie-Paneel an dem Anbindungselement.

Die Aufnahmevorrichtung kann derart an dem Anbindungselement fixiert sein, dass es in Hochrichtung mit der Stockschraube fluchtet.

An der Aufnahmevorrichtung ist beispielsweise eine Montageschiene für das Photovoltaik- bzw. Solarthermie-Paneel und/oder das Photovoltaik- bzw. Solarthermie-Paneel befestigbar.

Die Aufnahmevorrichtung kann eine Montageschiene für das Photovoltaik- bzw. Solarthermie-Paneel sein oder direkt an dem Photovoltaik- bzw. Solarthermie-Paneel ausgebildet sein, d.h. Bestandteil des Photovoltaik- bzw. Solarthermie-Paneel sein.

Bei einer beispielhaften Ausführungsform der Befestigungsanordnung nach der Erfindung ist die Aufnahmevorrichtung zweiteilig ausgestaltet und umfasst einen Anlagekörper und einen Aufnahmekörper.

Die Bohrung der Aufnahmevorrichtung weist beispielsweise eine in dem Anlagekörper ausgebildete erste Durchgangsbohrung und eine mit der ersten Durchgangsbohrung, insbesondere in Querrichtung, fluchtende, in dem Aufnahmekörper ausgebildete zweite Durchgangsbohrung auf oder ist aus der ersten Durchgangsbohrung und der zweiten Durchgangsbohrung gebildet.

Die erste Durchgangsbohrung und/oder die zweite Durchgangsbohrung können bzw. kann ein Innengewinde aufweisen.

Beispielsweise ist die erste Durchgangsbohrung gewindefrei und die zweite Durchgangsbohrung weist ein Innengewinde auf.

Die Schraube erstreckt sich beispielsweise durch die erste Durchgangsbohrung und ist in die zweite Durchgangsbohrung eingeschraubt, wobei der Kopf der Schraube an dem Anbindungselement anliegt. Somit ist die Aufnahmevorrichtung an dem Anbindungselement fixiert.

Bei einer bevorzugten Ausführungsform der Befestigungsanordnung nach der Erfindung liegt die Aufnahmevorrichtung, insbesondere der Anlagekörper, an dem Anbindungselement, insbesondere dem Rückenelement, insbesondere flächig, an.

Das Anbindungselement kann Vorsprünge, insbesondere eine erste Rillung, aufweisen und die Aufnahmevorrichtung kann mit den Vorsprüngen korrespondierende Einkerbungen, insbesondere eine zweite Rillung, umfassen. Somit ist eine Position der Aufnahmevorrichtung relativ zu dem Anbindungselement in Achsrichtung der Stockschraube beispielsweise durch Anordnung der Vorsprünge in den Einkerbungen sicherbar.

Bei einer bevorzugten Ausführungsform umfasst die Befestigungsanordnung nach der Erfindung ein Spannelement.

Das Spannelement ist beispielsweise eine Spannfeder, insbesondere eine Zylinderfeder, welche auf der Schraube angeordnet ist.

Das Spannelement ist beispielsweise zwischen den Anlagekörper und dem Aufnahmekörper angeordnet und ist durch Einschrauben der Schraube in die zweite Durchgangsbohrung spannbar.

Der Aufnahmekörper ist dem Anlagekörper durch Einschrauben der Schraube in die zweite Durchgangsbohrung annäherbar, insbesondere entgegen der Kraft, welche die Spannfeder auf den Aufnahmekörper ausübt.

Bei einer bevorzugten Ausführungsform umfasst die Befestigungsanordnung nach der Erfindung einen Dichtungsring. Der Dichtungsring liegt mit einer ersten Seite, insbesondere seiner in Hochrichtung oben angeordneten Oberseite, an dem Ringbund an. Mit einer der ersten Seite gegenüberliegenden zweiten Seite ist der Dichtungsring dichtend an dem Dach zur Anlage bringbar.

Die vorliegende Erfindung wird nachfolgend anhand rein schematischer und beispielhafter Figuren erläutert, welche ein Ausführungsbeispiel der Erfindung wiedergeben.

Darin zeigen:
- Figur 1:: eine perspektivische Darstellung einer Befestigungsvorrichtung nach der Erfindung in einem montierten Zustand;
- Figur 2:: eine weitere perspektivische Darstellung der Befestigungsvorrichtung nach der Erfindung in einem teilweise-montierten Zustand, zusammen mit einem Montagewerkzeug;
- Figur 3:: eine Seitenansicht der Befestigungsvorrichtung nach der Erfindung in dem in Figur 2 gezeigten teilweise-montierten Zustand;
- Figur 4:: eine Alleindarstellung einer Stockschraube nach der Erfindung der in Figur 1 gezeigten Befestigungsvorrichtung nach der Erfindung;
- Figur 5:: eine Alleindarstellung eines Anbindungselements der Befestigungsvorrichtung nach der Erfindung;
- Figur 6:: eine Alleindarstellung einer Aufnahmevorrichtung, einer Schraube und einer Spannfeder der Befestigungsvorrichtung nach der Erfindung; und
- Figur 7: eine Alleindarstellung eines alternativen Anbindungselements der Befestigungsvorrichtung nach der Erfindung.

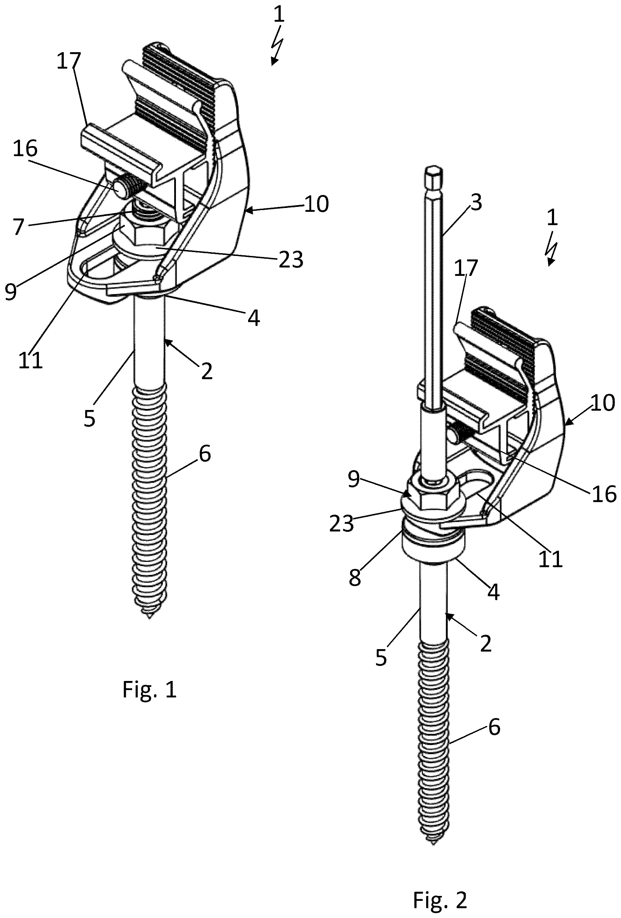

In den Figuren 1 bis 3 ist eine Befestigungsvorrichtung 1 nach der Erfindung dargestellt. In Figur 2 ist zudem ein für die Montage der Befestigungsvorrichtung 1 erforderliches Werkzeug 3 gezeigt.

Die Befestigungsvorrichtung 1 umfasst eine Stockschraube 2, ein Anbindungselement 10, eine Mutter 9 und eine Schraube 16.

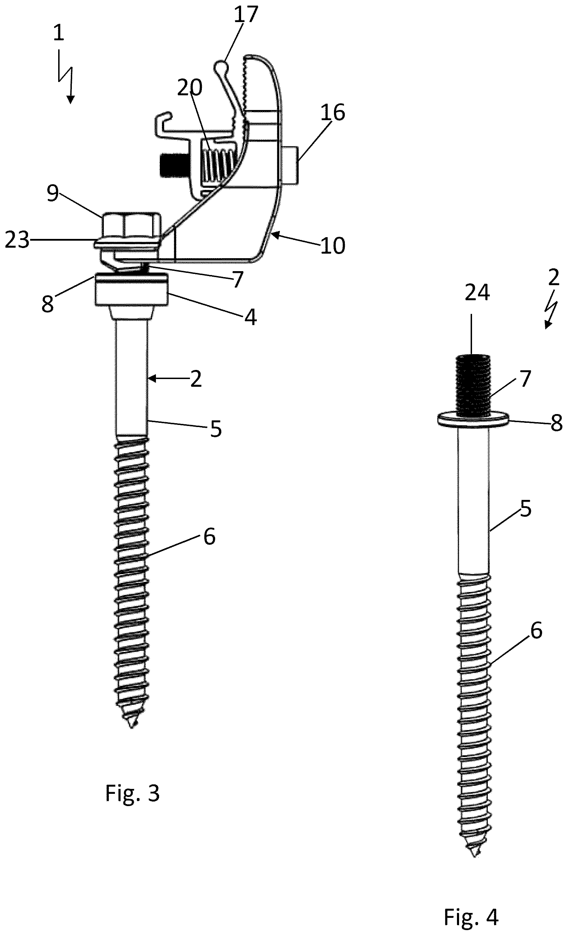

Die Stockschraube 2 weist, wie insbesondere aus der Alleindarstellung der Stockschraube 2 nach der Erfindung in Figur 4 ersichtlich ist, einen ersten Gewindeabschnitt 6, einen gewindelosen Schaft 5 und einen zweiten Gewindeabschnitt 7 auf. Der erste Gewindeabschnitt 6 weist ein selbstschneidendes Gewinde auf, das in ein Dach bzw. eine Dachkonstruktion einschraubbar ist. Der zweite Gewindeabschnitt 7 umfasst ein Regelgewinde. Der erste Gewindeabschnitt 6 ist mit dem zweiten Gewindeabschnitt 7 über den Schaft 5 verbunden. An einem dem zweiten Gewindeabschnitt 7 zugewandten Ende des Schafts 5 ist ein Ringbund 8 ausgebildet. Der Ringbund 8 ist bevorzugt an die Stockschraube 2 angeschmiedet. Es ist ebenfalls denkbar, dass der Ringbund 8 an der Stockschraube 2, beispielsweise mittels eines Klebemittels, nicht-lösbar fixiert ist.

Wie insbesondere aus den Figuren 2 und 3 ersichtlich ist, liegt an der dem ersten Gewindeabschnitt 6 zugewandten Seite des Schafts 5 ein Dichtungsring 4 flächig an. Der Dichtungsring 4 ist auf die Stockschraube 2 aufgeschoben. In einem funktionsgemäßen Montagezustand der Befestigungsvorrichtung 1 an einem Dach liegt der Dichtungsring 4 derart an dem Dach auf, dass der Dichtungsrichtung 4 ein Loch, in welchem die Stockschraube 2, insbesondere der zweite Gewindeabschnitt 7 angeordnet ist oder welches durch selbstschneidendes Einschrauben des zweiten Gewindeabschnitts 7 in das Dach entsteht, fluiddicht verschlossen ist.

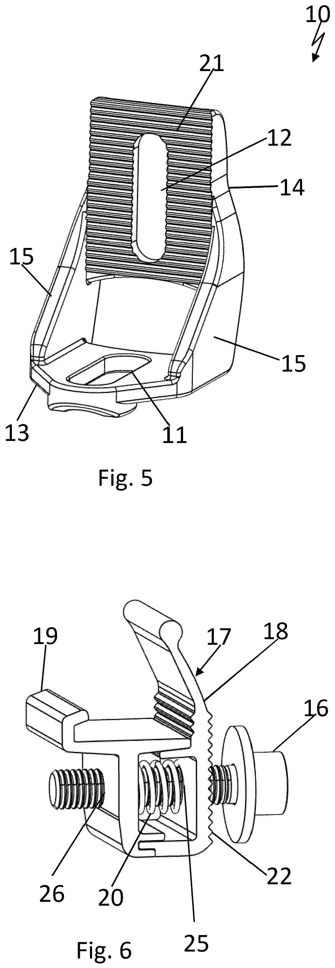

Das Anbindungselement 10, das in Figur 5 in Alleindarstellung gezeigt ist, umfasst ein Bodenelement 13 und ein Rückenelement 14. Das Bodenelement 13 erstreckt sich orthogonal zu einer Achsrichtung der Stockschraube 2, welche eine Hochrichtung bildet. Das Rückenelement 14 erstreckt sich im Wesentlichen in Hochrichtung, und mithin orthogonal zu dem Bodenelement 13. Das Rückenelement 14 grenzt in einer sich orthogonal zu der Hochrichtung erstreckenden Querrichtung endseitig an das Bodenelement 13 an. Das Bodenelement 13 und das Rückenelement 14 bilden somit bei einem Schnitt entlang einer sich in Querrichtung und Hochrichtung erstreckenden Schnittebene ein L-förmiges Profil.

Das Bodenelement 13 und das Rückenelement 14 sind seitlich über Verbindungswände 15, welche Seitenwände bilden, miteinander verbunden. Die Verbindungswände 15 erhöhen die Stabilität des Anbindungselements 10, bilden also eine Art Verstärkungsstruktur.

Das Anbindungselement 10 umfasst ein erstes Langloch 11 und ein zweites Langloch 12. Das erste Langloch 11 ist in dem Bodenelement 13 ausgebildet und erstreckt sich in Querrichtung. Das zweite Langloch 12 ist in dem Rückenelement 14 ausgebildet und erstreckt sich in Hochrichtung.

Die Befestigungsvorrichtung 1 umfasst ferner eine Aufnahmevorrichtung zur Halterung einer (nicht dargestellten) Montageschiene für ein Photovoltaik- bzw. Solarthermie-Paneel oder zur Halterung des (nicht dargestellten) Photovoltaik- bzw. Solarthermie-Paneel.

Abweichend von der in den Figuren 1 bis 3 dargestellten Befestigungsvorrichtung 1 ist es ebenfalls denkbar, dass anstelle der Aufnahmevorrichtung 17 eine Aufnahmevorrichtung vorgesehen ist, welche eine Montageschiene für ein Photovoltaik- bzw. Solarthermie-Paneel bildet, oder eine Aufnahmevorrichtung vorgesehen ist, welche Bestandteil eines Photovoltaik- bzw. Solarthermie-Paneel ist.

Die Aufnahmevorrichtung 17 umfasst einen Anlagekörper 18 und einen Aufnahmekörper 19. Der Anlagekörper 18 liegt flächig an dem Rückenelement 14 des Anbindungselementes 10 an. Zur Positionsfixierung der Aufnahmevorrichtung 17 relativ zu dem Anbindungselement 10 in Hochrichtung umfasst das Rückenelement 14 in einem Bereich, in welchem die Aufnahmevorrichtung 17 an dieser flächig anlegbar ist, Einkerbungen 21, insbesondere eine Rillung. Der Anlagekörper 18 weist an einer Seite, welche an dem Anbindungselement 10 anliegt, mit den Einkerbungen 21 korrespondierenden Vorsprünge 22 auf, insbesondere eine weitere Rillung.

Abweichend von der dargestellten Ausführungsform ist es ebenfalls denkbar, die Aufnahmevorrichtung 17 einteilig auszugestalten.

Die Aufnahmevorrichtung 17 umfasst eine Bohrung. Die Bohrung erstreckt sich durch den Anlagekörper 18 und den Aufnahmekörper 19. Insbesondere ist in dem Anlagekörper 18 eine erste Durchgangsbohrung 25 vorgesehen und der Aufnahmekörper 19 umfasst eine zweite Durchgangsbohrung 26. Die erste Durchgangsbohrung 25 und die zweite Durchgangsbohrung 26 fluchten, insbesondere in Querrichtung, miteinander.

Bei einer Montage der Befestigungsvorrichtung 1 an einem Dach ist das Anbindungselement 10 an der Stockschraube 2 vormontiert, d.h. an der Stockschraube 2 in Querrichtung verschiebbar gesichert. In dem vormontierten Zustand erstreckt sich die Stockschraube 2, insbesondere der zweite Gewindeabschnitt 7, durch das erste Langloch 11, wobei die Mutter 9 derart auf die Stockschraube 2 aufgeschraubt ist, dass das Anbindungselement 10 in Querrichtung relativ zu der Stockschraube 2 bewegbar ist. Ein Bewegungsspielraum des Anbindungselements 10 relativ zu der Stockschraube wird durch die Geometrie des ersten Langlochs 11, insbesondere die das erste Langloch 11 begrenzenden Wände des Anbindungselements 10, definiert.

Zur Montage der Befestigungsvorrichtung an einem Dach ist, wie in Figur 2 gezeigt ist, in einem ersten Schritt der erste Gewindeabschnitt 6 der Stockschraube 2 in das Dach einzuschrauben. Hierbei ist das Anbindungselement in Querrichtung derart relativ zu der Stockschraube 2 angeordnet, dass ein endseitig des zweiten Gewindeabschnitts 7 ausgebildeter Schraubenkopfantrieb 24 für ein Werkzeug 3 zugänglich ist. Insbesondere liegt der zweite Gewindeabschnitt 7 in diesem Zustand an einem von dem Rückenelement 14 entfernten Bereich der das erste Langloch 11 definierenden Wand an. Das Anbindungselement 10 ist in Querrichtung also von der Stockschraube 2 weg verschoben.

Bei dem Schraubenkopfantrieb 24 handelt es sich um einen Innensechskant. Die Stockschraube 2 ist somit auf einfache Weise mittels des Werkzeugs 3 in das Dach einschraubbar.

Anschließend wird das Anbindungselement 10 in Querrichtung in Richtung der Stockschraube 2 verschoben, insbesondere bis die Stockschraube 2 an einer das erste Langloch 11 endseitig begrenzenden Wand anliegt, welche dem Rückenelement 14 am nächsten ist. In dieser Position fluchten die Stockschraube 2 und die Aufnahmevorrichtung 17 in Hochrichtung miteinander.

Dann wird die Mutter 9 derart, insbesondere weiter, auf den zweiten Gewindeabschnitt 7 aufgeschraubt, dass der Ringbund 8 und die Mutter 9, insbesondere ein dem Anbindungselement 10 zugewandter Flansch 23 der Mutter 9, das Anbindungselement 10 kraftschlüssig fixieren.

Zur Befestigung der Aufnahmevorrichtung 17 an dem Anbindungselement 10 wird die Schraube 16 durch das zweite Langloch 12 und die erste Durchgangsbohrung 25 eingeführt. Eine Spannfeder 20 wird auf die Schraube 16 aufgebracht und die Schraube 16 wird in ein Innengewinde der zweiten Durchgangsbohrung 26 eingeschraubt, wodurch die Spannfeder 20 zusammengedrückt und hierdurch gespannt wird.

Abweichend von der dargestellten Ausführungsform ist es ebenfalls denkbar, auf die Spannfeder 20 zu verzichten.

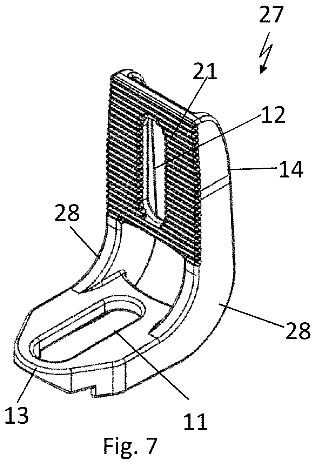

In Figur 7 ist ein alternatives Anbindungselement 27 der in Figur 1 gezeigten Befestigungsvorrichtung 1 nach der Erfindung gezeigt. Das alternative Anbindungselement 27 entspricht im Wesentlichen dem in Figur 5 gezeigten Anbindungselement 10. Mithin werden im Folgenden lediglich die Unterscheidungsmerkmale erläutert, wobei im Übrigen die obigen Ausführungen betreffend das Anbindungselement 10 entsprechend gelten.

Abweichend von dem Anbindungselement 10, sind bei dem alternativen Anbindungselements 27 das Bodenelement 13 und das Rückenelement 14 an deren einander zugwandten Seiten, d.h. das Bodenelement 13 in einem hinteren Endbereich und das Rückenelement 14 in einem unteren Endbereich, über zwei Verbindungswände 28 miteinander verbunden.

### Bezugszeichenliste:

- 1: Befestigungsvorrichtung
- 2: Stockschraube
- 3: Werkzeug
- 4: Dichtungsring
- 5: Schaft
- 6: erster Gewindeabschnitt
- 7: zweiter Gewindeabschnitt
- 8: Ringbund
- 9: Mutter
- 10: Anbindungselement
- 11: erstes Langloch
- 12: zweites Langloch
- 13: Bodenelement
- 14: Rückenelement
- 15: Verbindungswand
- 16: Schraube
- 17: Aufnahmevorrichtung
- 18: Anlagekörper
- 19: Aufnahmekörper
- 20: Spannfeder
- 21: Einkerbung
- 22: Vorsprung
- 23: Flansch
- 24: Schraubenkopfantrieb
- 25: erste Durchgangsbohrung
- 26: zweite Durchgangsbohrung
- 27: alternatives Anbindungselement
- 28: Verbindungswand

## Patentansprüche

1. Stockschraube zur Fixierung eines Anbindungselements zur Befestigung von Photovoltaik- und/oder Solarthermie-Paneelen an einem Dach, umfassend einen in das Dach einschraubbaren ersten Gewindeabschnitt (6), einen zweiten Gewindeabschnitt (7) und einen den ersten Gewindeabschnitt (6) mit dem zweiten Gewindeabschnitt (7) verbindenden Schaft (5),
**gekennzeichnet durch**,
einen Ringbund (8), der an dem Schaft (5) angeordnet ist.

2. Stockschraube nach Anspruch 1,
**dadurch gekennzeichnet,**
**dass** die Stockschraube (2) einteilig ausgebildet ist oder der Ringbund (8) nicht-lösbar an dem Schaft (5) fixiert ist.

3. Stockschraube nach Anspruch 1 oder 2,
**dadurch gekennzeichnet,**
**dass** der erste Gewindeabschnitt (6) ein selbstschneidendes Gewinde umfasst und/oder der zweite Gewindeabschnitt (7) ein Regelgewinde umfasst.

4. Stockschraube nach einem der Ansprüche 1 bis 3,
**dadurch gekennzeichnet,**
**dass** der zweite Gewindeabschnitt (7) einen Schraubenkopfantrieb (24) umfasst, insbesondere einen Innensechskant.

5. Befestigungsvorrichtung zur Befestigung zur Befestigung von Photovoltaik- und/oder Solarthermie-Paneelen an einem Dach, umfassend ein Anbindungselement (10) und eine Mutter (9),
**gekennzeichnet durch**
eine Stockschraube (2) nach einem der Ansprüche 1 bis 4, wobei die Mutter (9) aus einer Montageposition, in welcher das Anbindungselement (10, 27) relativ zu der Stockschraube (2) beweglich ist, derart auf den zweiten Gewindeabschnitt (7) aufschraubbar ist, dass die Mutter (9) in eine Sicherungsposition gelangt, in der die Mutter (9) zusammen mit dem Ringbund (8) das Anbindungselement (10, 27) kraftschlüssig an der Stockschraube (2) fixiert.

6. Befestigungsvorrichtung nach Anspruch 5,
**dadurch gekennzeichnet,**
**dass** das Anbindungselement (10, 27) ein Bodenelement (13) und ein endseitig an das Bodenelement (13) angrenzendes, sich zumindest im Wesentlichen orthogonal zu dem Bodenelement (13) erstreckendes Rückenelement (14) umfasst.

7. Befestigungsvorrichtung nach Anspruch 6,
**dadurch gekennzeichnet,**
**dass** das Anbindungselement (10, 27) mindestens eine Verbindungswand (15, 28), insbesondere zwei Verbindungswände (15, 28) umfasst, welche das Bodenelement (13) mit dem Rückenelement (14) verbinden.

8. Befestigungsvorrichtung nach einem der Ansprüche 5 bis 7,
**dadurch gekennzeichnet,**
**dass** das Anbindungselement (10, 27) ein erstes Langloch (11) umfasst, durch welches sich die Stockschraube (2) erstreckt.

9. Befestigungsvorrichtung nach einem der Ansprüche 5 bis 8,
**dadurch gekennzeichnet,**
**dass** das Anbindungselement (10, 27) ein zweites Langloch (12) umfasst, durch welches sich eine Schraube (16) erstreckt, welche zur Fixierung der Aufnahmevorrichtung (17) an dem Anbindungselement (10, 27) in eine Bohrung der Aufnahmevorrichtung (17) einschraubbar ist.

10. Befestigungsvorrichtung nach Anspruch 9,
**dadurch gekennzeichnet,**
**dass** die Schraube (16) einen weiteren Schraubenkopfantrieb umfasst, dessen Ausgestaltung der Ausgestaltung des Schraubenkopfantriebs (24) der Stockschraube (2) entspricht.

11. Befestigungsvorrichtung nach einem der Ansprüche 5 bis 10,
**gekennzeichnet durch**
eine Aufnahmevorrichtung (17), die an dem Anbindungselement (10, 27) fixiert ist und an welcher das Photovoltaik- und/oder Solarthermie-Paneelen fixierbar ist.

12. Befestigungsanordnung nach Anspruch 11,
**dadurch gekennzeichnet,**
**dass** die Aufnahmevorrichtung (17) einen Anlagekörper (18) und einen Aufnahmekörper (19) umfasst, wobei die Bohrung eine in dem Anlagekörper (18) ausgebildete erste Durchgangsbohrung (25) und eine mit der ersten Durchgangsbohrung (25) fluchtende, in dem Aufnahmekörper (19) ausgebildete zweite Durchgangsbohrung (26) umfasst, und die Schraube (16) derart in der ersten Durchgangsbohrung (25) anordbar ist und in die zweite Durchgangsbohrung (26) einschraubbar ist, dass die Aufnahmevorrichtung (17) an dem Anbindungselement (10, 27) fixiert ist.

13. Befestigungsanordnung nach Anspruch 12,
**dadurch gekennzeichnet,**
**dass** der Anlagekörper (18) flächig an dem Anbindungselement (10, 27) anliegt, wobei das Anbindungselement (10, 27) Vorsprünge (22) aufweist und der Anlagekörper (18) mit den Vorsprüngen (22) korrespondierende Einkerbungen (21) umfasst, in welchen die Vorsprünge (22) zur Sicherung des Aufnahmeelements relativ zu dem Anbindungselement (10, 27) in Achsrichtung der Stockschraube (2) anordbar sind.

14. Befestigungsanordnung nach Anspruch 12 oder 13,
**gekennzeichnet durch**
eine Spannfeder (20), welche zwischen dem Anlagekörper (18) und dem Aufnahmekörper (19) angeordnet ist, wobei die Spannfeder (20) **durch** Einschrauben der Schraube (16) in die zweite Durchgangsbohrung (26) spannbar ist.

15. Befestigungsanordnung nach einem der Ansprüche 5 bis 14,
**gekennzeichnet durch**
einen Dichtungsring (4), welcher an einer ersten Seite an dem Ringbund (8) anliegt und an einer der ersten Seite gegenüberliegenden zweiten Seite dichtend an dem Dach zur Anlage bringbar ist.
